Europäisches Patentamt

European Patent Office

Office européen des brevets

(19)

(11) **EP 0 648 145 B1**

(12) **EUROPÄISCHE PATENTSCHRIFT**

(45) Veröffentlichungstag und Bekanntmachung des Hinweises auf die Patenterteilung:
**18.08.1999 Patentblatt 1999/33**

(21) Anmeldenummer: **94915066.8**

(22) Anmeldetag: **19.04.1994**

(51) Int. Cl.$^6$: **B01D 29/23**, B01D 29/46, B01D 29/52, B01D 29/68

(86) Internationale Anmeldenummer:
**PCT/EP94/01206**

(87) Internationale Veröffentlichungsnummer:
**WO 94/23820 (27.10.1994 Gazette 1994/24)**

(54) **RÜCKSPÜLBARES FILTER**

BACKWASHABLE FILTER

FILTRE A LAVAGE A CONTRE-COURANT

(84) Benannte Vertragsstaaten:
**FR GB**

(30) Priorität: **20.04.1993 DE 4312731**

(43) Veröffentlichungstag der Anmeldung:
**19.04.1995 Patentblatt 1995/16**

(73) Patentinhaber: **TAPROGGE GMBH**
**D-58300 Wetter (DE)**

(72) Erfinder:
• **EIMER, Klaus**
**D-40883 Ratingen (DE)**
• **SCHILDMANN, Hans-Werner**
**D-42579 Heiligenhaus (DE)**
• **PATZIG, Dieter**
**D-40882 Ratingen (DE)**

• **TROSTMANN, Dirk**
**D-58453 Witten (DE)**

(74) Vertreter:
**Patentanwälte Wenzel & Kalkoff**
**Postfach 24 48**
**58414 Witten (DE)**

(56) Entgegenhaltungen:
CH-A- 366 031      DE-C- 907 166
FR-A- 2 559 678      US-A- 3 006 478

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein rückspülbares Filter,

- bei dem die Rückspülung durch Umkehrung der Durchströmungsrichtung bewirkt wird,
- mit einer Schicht aus übereinandergesetzten Elementen aus einem elastisch verformbaren Material,
- von denen jeweils zwei benachbarte Elemente einen durchströmten Spalt bilden,
- dessen auf der einen Seite der übereinandergesetzten Elemente liegende Zustromseite die Anlagerungsstelle für Verunreinigungen durch Partikel wie Sandkörner etc. ist und
- dessen Abstromseite auf der anderen Seite der Elemente gebildet ist,
- die mit Hilfe von an den Elementen angeordneten Abstandselementen wie Noppen oder Stegen im Abstand zueinander gehalten sind.

Derartige rückspülbare Filter sind seit langem bekannt. Die Elemente bestehen gewöhnlich aus kreisringförmigen Elementen, die zur Bildung von Filterkerzen als Schicht übereinandergesetzt werden. Filter dieser Art werden zum Beispiel bei Dampfkondensatoren zur Filterung des Kühlwassers oder zur Aufbereitung von Brauchwasser in der chemischen und mechanischen Industrie eingesetzt. Die Filterkerzen sind in der Regel auf einem Filterboden angeordnet, der eine der Anzahl der Filterkerzen entsprechende Anzanl von Löchern aufweist. Diese bilden den Zugang zu den Filterkerzen, deren Filterwirkung folglich bei einer Durchströmung von innen nach außen eintritt.

Zum Rückspülen der Filterkerzen gibt es mehrere Möglichkeiten. Zum einen kann an dem Filterboden ein Saugschuh rotieren, der nacheinander den Zugang zu jeder Filterkerze versperrt und mit Hilfe einer Saugpumpe unter Unterdruck setzt, während die Filterung in den übrigen Filterkerzen fortgesetzt wird. In der mit Saugdruck beaufschlagten Filterkerze kommt es zu einer Umkehrung der Durchströmung von außen nach innen mit der Folge, daß die Verunreinigungen von der Anlagerungsstelle abgespült und aus der Kerze ausgetragen werden. Statt eines rotierenden Saugschuhs kann auch ein rotierender Filterboden vorgesehen sein, wobei dann der Saugschuh oder die Saugschuhe feststehen. Abweichend davon kann der Filterboden auf der Zuströmseite in Segmente in der Anzahl der Filterkerzen unterteilt und jedes Segment gesondert absperrbar und absaugbar sein. Es kommt dann ebenfalls zu einer Rückströmung des gefilterten Wassers von außen nach innen durch die Filterkerze in das abgesperrte Segment hinein, von dort aus dem Filtergehäuse heraus, beispielsweise mit Hilfe einer Rohrleitung.

Aus der DE-GM 72 36 018 geht ein rückspülbares Filter der eingangs genannten Art als bekannt hervor, bei dem die schichtweise übereinandergesetzten Elemente von innen nach außen durchströmte Filterkerzen bilden. Jedes Element besteht aus einer Ringscheibe mit schrägstehenden beweglichen Zungen an der Innenseite, die paarweise federnd aufeinanderliegend Schlitze bilden. Die Schlitze weisen am Innenrand der Zungen einen relativ engen Öffnungsquerschnitt auf und erweitern sich in Strömungsrichtung aufgrund der schrägen Anordnung der Zungen. Durch eine elastische Ausbildung der Zungen können diese beim Rückspülvorgang auseinandergedrückt werden, so daß sich die Eintrittsquerschnitte entsprechend erweitern und im Eintrittsbereich verklemmte Verunreinigungen beim Rückspülen freisetzen.

Aus der deutschen Offenlegungsschrift 34 09 036 ist ein rückspülbares Filter bekannt, bei dem die Schicht aus übereinandergesetzten Elementen in Form von Filterkerzen ebenfalls aus Ringscheiben gebildet ist, die im Filterbetrieb radial von innen nach außen durchströmt werden. Durch zwei benachbarte Ringscheiben wird ein mehrfach unterteilter Ringspalt für den Durchgang der Strömung gebildet. Dieser ist so gestaltet, daß die inneren Enden von jeweils dünner ausgeführten Ringscheibenabschnitten beim Rückspülvorgang von einem im Spaltabstand gegenüberliegenden und dicker ausgeführten Ringscheibenabschnitt in Richtung einer Spaltvergrößerung abgehoben werden, um so gegebenenfalls in der Ringspaltöffnung verklemmte Verunreinigungen beim Rückspülen freizusetzen. Der Randabschnitt der dünneren Ringscheibe bewegt sich dabei folglich quer zur Strömungsrichtung des zu filternden bzw. des rückspülenden Mediums. Dieses Prinzip wird auch bei einem Blockfilter angewendet, das aus der britischen Patentschrift 1 273 976 bekannt ist. Statt der Ringspalte sind rechteckige Spalte vorhanden, deren eine Kante durch Zungen gebildet wird, die beim Rückspülen zur Spaltvergrößerung quer zur Strömungsrichtung ausfedern können.

Aus der EP-PS 159 961 ist ein rückspülbares Filter bekannt, das elastische Abstandshalter zwischen den Filterelementen sowie Mittel aufweist, um den Abstand zwischen den Filterelementen durch eine entsprechende Änderung des auf die Filterelemente ausgeübten Druckes zu variieren.

In einem aus der DE-OS 33 00 035 bekannten Filter der eingangs genannten Art weisen die ringscheibenförmigen, übereinandergesetzten Elemente innen schräg sowie parallel im Abstand zueinander verlaufende Flansche auf. Die Flansche dienen dazu, die Strömung umzulenken, um das Herauslösen von Schmutzteilchen, die sich in den Zwischenräumen zwischen den Flanschen angesammelt haben, beim Rückspülen zu verbessern und ein Vorfiltern der Strömung vor dem Eintritt in die Filterelemente zu erreichen.

Allen vorstehend beschriebenen Filtersystemen liegt ein gemeinsames Prinzip zugrunde, wonach zur Beeinflussung der Größe der Spaltöffnung eine elastische Verformung von die Spaltöffnungen begrenzenden Elementen quer zur Strömungsrichtung erfolgt, das heißt quer zu der Hauptrichtung der Kräfte, die die Strömung auf am Filterspalt angelagerte Schmutzteilchen ausübt. Durch diese Kräfteverhältnisse und durch die Lage und Form der elastisch verformbaren Elemente ergibt sich, daß Schmutzteilchen mit Abmessungen in der Größenordnung der Spaltöffnung und besonders solche, die im Bereich der Öffnungskanten des Filterspaltes keilförmig ausgebildete Oberflächenteilstucke aufweisen, das den Filterspalt begrenzende elastische Element durch die Keilwirkung wegdrücken, so daß sich der Filterspalt unter Aufbau entsprechender Verformungskräfte erweitert und sich die Schmutzteilchen so mit einer bestimmten Klemmkraft in der Spaltöffnung festklemmen. Beim Rückspülen lassen sich die die Schmutzteilchen festhaltenden Klemmkräfte nur überwinden, wenn im Vergleich zu den Klemmkräften größere Kräfte oder aber Verformungen erzeugt werden.

Im Falle des aus der EP-PS 159 961 bekannten Filters wird hierfür die auf den Elementenstapel wirkende äußere Kraft verringert, so daß sich die Elemente voneinander lösen können.

Bei den beiden anderen bekannten Filtern erfolgt die Aufweitung der Spaltöffnung dagegen ausschließlich durch die beschriebene elastische Verformung der Filterelemente selbst. Dabei ergeben sich folgende Verhältnisse der Strömungskräfte und Differenzdrücke an der Spaltöffnung während des Filtervorganges und während des Rückspülvorganges: Kurz vor Einleitung des Rückspülvorganges hat das Filter seinen größten Verschmutzungsgrad erreicht, die Filterspalte sind durch Schmutzteilchen abgedeckt, und die zu reinigende Flüssigkeit strömt mit höherer Geschwindigkeit und höherem Differenzdruck durch die noch offene Restspaltöffnung. Eine Verstopfung der Spaltöffnung von 50 % erhöht die Druckdifferenz bereits auf 400 % im Vergleich zu dem sauberen Filter, und eine Verschmutzung von 90 % hat sogar eine hundertfache Druckdifferenz zur Folge. Durch den hohen Differenzdruck werden die Schmutzteilchen mit sehr hoher Kraft in die Spaltöffnung gedrückt und verklemmen sich unter Aufweitung der Spaltöffnung, wobei durch die elastische Verformung der die Spaltöffnung begrenzenden Elemente hohe Klemmkräfte bzw. Rückhaltekräfte aufgebaut werden.

Beim Rückspülen soll eine Vergrößerung der Spaltöffnung gegenüber dem verschmutzten Zustand herbeigeführt werden. Dafür sind im Bereich verklemmter Schmutzpartikel Kräfte erforderlich, die größer sind als die Klemmkräfte. Da die Spaltöffnung zu Beginn des Rückspülvorgangs sofort und problemlos von den nicht verklemmten Schmutzteilchen befreit wird, steht der Rückströmung eine sehr viel größere Spaltöffnung zur Verfügung als kurz vor dem Rückspülen. Bei gleichem Wassermengenstrom entstehen folglich wesentlich geringere Druckdifferenzen und damit wesentlich geringere Kräfte als im verschmutzten Zustand. Als Folge wird die Spaltöffnung nicht ausreichend erweitert, so daß auch die Verklemmung der Schmutzteilchen nicht aufgehoben werden kann.

Die negativen Auswirkungen der Druckverhältnisse und der starken Klemmkräfte nehmen noch dadurch zu, daß die zur Bereitstellung großer Filterflächen lang ausgeführten Filterkerzen beim Rückspülen an ihrem Kopf mit geringerer Geschwindigkeit durchströmt werden als an ihrem Fuß. Daher verschmutzen die Filterkerzen in der Praxis auch irreversibel vom Kopf aus, bis am Fuß eine geringe Restfläche übrigbleibt, die von dem Rückspülstrom noch gereinigt werden kann.

Um eine Aufweitung der Spaltöffnung im Filterbetrieb und ein Verklemmen von Schmutzteilchen zu erschweren, hat man bereits versucht, die elastischen Teile der Filterelemente unter Vorspannung einzubauen. Aber auch diese Vorspannung muß zur Erreichung einer Aufweitung der Spaltöffnung durch den Rückspülstrom überwunden werden, so daß die Probleme bei der Rückspülung im Falle einer Vorspannung der elastischen Teile nur noch zunehmen.

Es besteht daher die Aufgabe, ein rückspülbares Filter der eingangs genannten Art so zu verbessern, daß in der Spaltöffnung klemmend festgehaltene Partikel beim Rückspülen leichter als bisher freigesetzt werden, insbesondere auch bei niedrigen Strömungsgeschwindigkeiten.

Zur Losung dieser Aufgabe wird erfindungsgemäß vorgeschlagen, daß

-   jedes Element an seiner Zustromseite eine mit ihrer breiten Vorderfläche der Stromung zugewandte, in Strömungsrichtung elastisch auslenkbare Lippe trägt,
-   deren Öffnungskante mit der gegenüberliegenden festen Öffnungskante des benachbarten Elements die Spaltöffnung bildet,
-   und daß Stützen neben der Lippe angeordnet sind, deren jeweils der Lippe mit Abstand von dieser zugewandte Seite eine geringe Bewegung der Lippe in Strömungsrichtung bis zum Anschlag der Lippe an dieser Seite gestattet,
-   und daß der Abstand der Öffnungskante jeder Lippe von der gegenüberliegenden festen Öffnungskante des benachbarten Elements - ausgehend von der Stellung ohne Belastung durch Strömungskräfte - auf dem Weg der elastischen Auslenkung oder elastischen Verformung der Lippe in Strömungsrichtung bis zum Anschlag an der Seite der neben der Lippe angeordneten Stütze abnimmt, so daß ein mit der Strömung klemmend in die Spaltöffnung eindringendes Partikel eine die Spaltöffnung verengende Mitnahmekraft auf die Öffnungskante der Lippe ausübt.

Nach dieser Lösung werden die zur Bildung eines Filters schichtweise übereinandergesetzten Elemente in Abkehr von der bisher bekannten Technik so ausgebildet, daß die die Spaltöffnung begrenzenden elastisch verformbaren Teile, hier eine elastisch auslenkbare oder elastisch verformbare Lippe, unter dem Einfluß von in den Öffnungsspalt drängenden Partikeln nicht in Richtung einer Vergrößerung des Öffnungsspaltes ausweichen, sondern statt dessen sogar eine Spaltöffnungsverengung bewirkt wird, so daß Schmutzpartikeln ein tiefes Eindringen in die Spaltöffnung mit der Folge des Aufbaus hoher Klemmkräfte verwehrt ist. Die erfindungsgemäß an der Zustromseite jedes Elements ausgebildete Lippe trägt eine der Strömung zugewandte breite Vorderfläche, auf die die Druckdifferenz der Strömung ebenso wirksam wird wie auf ein klemmend in die Spaltöffnung eindringendes Schmutzteilchen, so daß die in Strömungsrichtung auf die Vorderflache der Lippe durch den Strömungsdruck ausgeübten Kräfte in dem gleichen Verhältnis zunehmen wie die Kräfte, unter denen das Schmutzteilchen in die Spaltöffnung gedrückt wird. Die Spaltöffnung ist durch den Abstand der Öffnungskante der Lippe von der gegenüberliegenden festen Öffnungskante des im Filterstapel benachbarten Elements bestimmt. Stärker werdende Strömungskräfte - wie im Falle einer erhöhten Druckdifferenz infolge einer entsprechenden Verschmutzung des Filters - bewirken eine Auslenkung der elastisch auslenkbaren oder elastisch verformbaren Lippe stets in Richtung einer Verengung des Öffnungsspalts, wenn der Abstand der Öffnungskante jeder Lippe von der gegenüberliegenden festen Öffnungskante des benachbarten Elements aus dem unbelasteten Zustand auf dem Weg in Strömungsrichtung - nämlich durch elastische Auslenkung oder elastische Verformung der Lippe aufgund der angreifenden Kräfte - bis zu dem an der Seite der zugehörigen Stütze vorgesehenen Anschlag abnimmt. Eine Spreizung der Spaltöffnung wie beim Stand der Technik ist infolgedessen ausgeschlossen, weil, wie gesagt, hohen auf die Schmutzteilchen wirkenden Eintreibkräften entsprechend hohe auf die elastisch auslenkbare Lippe wirkende Strömungskräfte gegenüberstehen und eine öffnungsspalterweiternde Wirkung der Eintreibkräfte verhindern.

Die erfindungsgemäß neben der Lippe angeordneten Stützen begrenzen die Auslenkbewegung der Lippe, damit eine definierte untere Weite des Öffnungsspaltes erhalten bleibt. Die grundsätzliche Wechselwirkung zwischen der Zunahme der gleichermäßen auf die breite Vorderfläche der Lippe und auf die Schmutzteilchen wirkenden Strömungskräfte und der elastischen Verformbarkeit der Lippe in Richtung einer Verengung des Öffnungsspaltes wird durch die Stützen nicht berüht.

Es wird darauf hingewiesen, daß jedes Element dieselbe Gestalt hat, also zur Bildung der Filterschicht ein einziger Elementtyp benutzt wird.

Eine besonders wesentliche Weiterbildung der Erfindung besteht darin, daß die Lippe bereits durch einen geringen Differenzdruck der Strömung zum Anschlag an die Seiten der Stützen elastisch auslenkbar ist. Sobald zum Einleiten eines Rückspülvorgangs die Strömung unterbrochen und damit die Druckdifferenz an der Lippe aufgehoben wird, kehrt die Lippe unter der Wirkung der elastischen Rückstellkräfte in ihre Ausgangslage zurück, so daß sich die Spaltöffnung entsprechend aufweitet. In der Spaltöffnung eingeklemmte Schmutzpartikel werden auf diese Weise von selbst freigegeben, und zwar bereits vor dem Einsetzen der Rückspülung. Da der Effekt der Selbstaufweitung der Spaltöffnung unabhängig von den durch den Rückspülstrom bewirkten Kräften ist, läßt die Erfindung eine einwandfreie Rückspülung auch sehr langer Filterkerzen mit geringem Rückspülstrom zu. Ein Verklemmen von Schmutzteilchen mit Abmessungen in der Größenordnung der Spaltöffnung wird erfindungsgemäß vermieden, da sich die Spaltöffnung bereits bei geringer Durchströmung im Filterbetrieb kontrolliert und durch die Begrenzung der Auslenkung der Lippe durch die Stützen in einem vorgegebenen Maß geringfügig verkleinert und sich beim Anhalten der Strömung, wie bereits angegeben, ohne Rückspülkräfte durch elastische Rückverformung wieder aufweitet. Bei dieser Ausführungsform der Erfindung, wenn nämlich bereits relativ geringe Differenzdruckkräfte eine deutliche elastische Verformung der Lippe in Richtung einer Verengung des Öffnungsspaltes bewirken, sind die Stützen zur Begrenzung der Auslenkung bzw. der elastischen Verformung der Lippe notwendig, es sei denn, die Auslenkung wird in anderer Weise gesteuert.

Aufgrund der erfindungsgemäß vorgesehenen elastischen Auslenkbarkeit oder elastischen Verformbarkeit der Lippe kommt als Werkstoff primär ein entsprechend elastischer Kunststoff in Frage.

Bei Einhaltung der in Anspruch 3 angegebenen Merkmale und Bedingungen wird in bevorzugter Weise sichergestellt, daß klemmend in die Spaltöffnung eindringende Schmutzpartikel den Öffnungsspalt nicht aufdrucken bzw. aufweiten können, sondern die resultierenden Kräfte in Richtung einer Verengung der Spaltöffnung wirken. Die Angaben gelten für übliche Reibpaarungen zwischen den die Spaltöffnung begrenzenden Kanten der Elemente und den Schmutzpartikeln.

Die Anwendung der Erfindung auf ringförmige Elemente, insbesondere auf solche, die zur Bildung einer Filterkerze übereinandergesetzt sind, wird bevorzugt, aber die erläuterten Vorteile und Wirkungen ergeben sich auch an langgestreckten Filterschichten, die quer in einer Strömung eines zu filternden Mediums liegen.

Weitere vorteilhafte Ausgestaltungen der Erfindung sind den Ansprüchen 6 bis 23 zu entnehmen.

Nachfolgend werden Ausführungsbeispiele der Erfindung, die in der Zeichnung dargestellt sind, näher erläutert; in der Zeichnung zeigen:

Fig. 1 eine Längsschnittansicht durch ein erstes Ausführungsbeispiel eines Filters;

Fig. 2 eine Längsschnittansicht durch eine Filterkerze des in der Fig. 1 dargestellten Filters;

Fig. 3 eine Draufsicht auf einen Zwischenring in der Filterkerze gemäß Fig. 2;

Fig. 4 eine Draufsicht auf ein ringförmiges Element zur Bildung einer Filterkerze gemäß einem Ausführungsbeispiel der Erfindung;

Fig. 5 eine Querschnittsansicht entlang der Linie V-V der Fig. 4;

Fig. 6 eine Querschnittsansicht entlang der Linie VI-VI der Fig. 4;

Fig. 7 eine Querschnittsansicht entlang der Linie VII-VII der Fig. 4; und

Fig. 8 eine Querschnittsansicht von fünf zu einer Filterschicht übereinandergesetzten ringförmigen Elementen entsprechend dem Ausführungsbeispiel gemäß Fig. 4 - 7;

Fig. 9 eine vergrößerte Ansicht der in Fig. 8 eingekreisten Einzelheit mit Darstellung von zwei Elementen im Bereich des Spaltes und einer Lippe zwecks Veranschaulichung der Geometrie in diesem Bereich sowie der Kräfteverhältnisse beim Eindringen eines Partikels in die Spaltöffnung;

Fig. 10 eine schematische Darstellung eines weiteren Beispiels von zwei übereinander angeordneten ringförmigen Elementen zur Bildung eines durch Stege unterteilten Ringspaltes eines Filters.

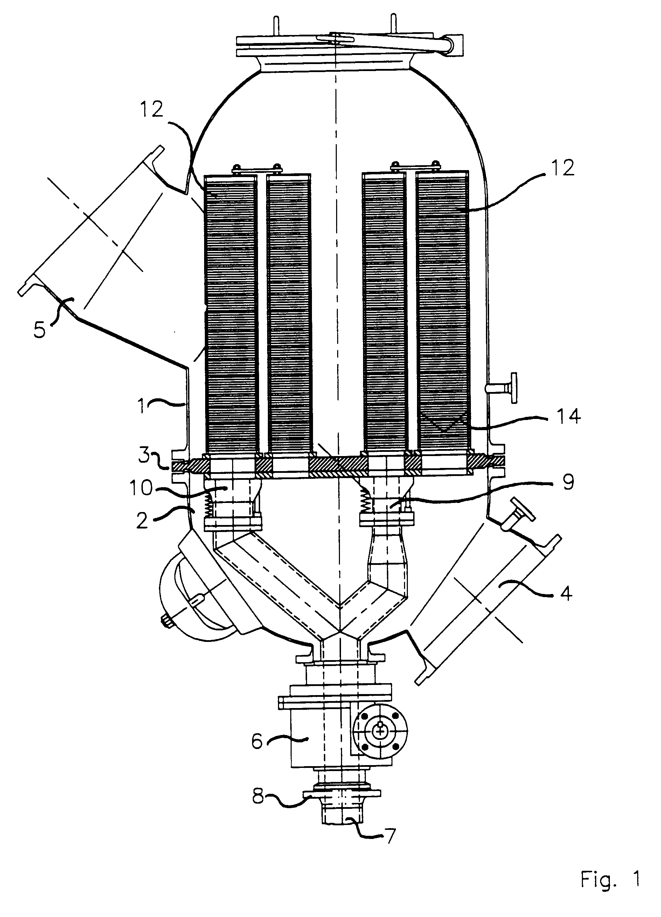

In der Fig. 1 ist ein Ausführungsbeispiel für ein Filter gemäß der Erfindung gezeigt, das zwischen die Flanschen zweier entsprechender Leitungen gesetzt werden kann, um z. B. Brauchwasser zu filtern. Dazu sind ein Einlaß 4 und ein Auslaß 5 achsgleich zueinander angeordnet.

Der Einlaß 4 gehört zu einem unteren Gehäuseteil 2, während der Auslaß 5 zu einem oberen Gehäuseteil 1 gehört. Beide Gehäuseteile sind unter Einschluß eines Filterbodens 3 miteinander verbunden. Die Teilungsebene zwischen beiden Gehäuseteilen 1 und 2 verläuft unter einem Winkel von 45°. Durch Verdrehen des einen Gehäuseteils gegenüber dem anderen können auch andere Strömungskonfigurationen erreicht werden, also zum Beispiel eine Umlenkung von 90° von der Horizontalen in die Vertikale nach oben oder unten.

Der Filterboden 3 trägt mehrere Filterkerzen 12, die Bestandteil des rückspülbaren Filters sind. An der den Filterkerzen 12 abgewandten Seite des Filterbodens 3 befinden sich zwei Saugschuhe 9 und 10, die an ein gemeinsames Saugrohr 7 angeschlossen sind.

Das Saugrohr 7 ist an die Saugseite einer nicht näher dargestellten Pumpe angeschlossen. Die beiden Saugschuhe 9 und 10 werden mit Hilfe eines Getriebes 6 in Drehung versetzt, wobei ein Drehanschluß, 8 dafür sorgt, daß das Saugrohr 7 stillsteht, während die beiden Saugschuhe 9 und 10 umlaufen können. Der Flansch für den Anschluß eines Elektromotors an dem Getriebe 6 ist in der Fig. 1 deutlich zu erkennen.

Jeder Saugschuh 9 und 10 liegt abdichtend an der Unterseite des Filterbodens 3 an, der im übrigen völlig glatt ist, also den Saugschuhen das Gleiten über den Filterboden ohne Beschädigung gestattet. Bei starker Verunreinigung der zu filternden Flüssigkeit wird fortlaufend Flüssigkeit über das Saugrohr 7 abgesaugt, und die beiden Saugschuhe 9 und 10 laufen fortwährend mit Hilfe des Getriebes 6 und des zugehörigen Antriebes um. Dabei läuft folgender Vorgang ab: Die in den Einlaß 4 einstromende Flüssigkeit strömt über die Löcher in dem Filterboden 3 in die Filterkerzen 12. Diese werden dabei von innen nach außen radial durchströmt. Wie weiter unten noch näher erläutert wird, sind an der Innenseite der Filterkerzen 12 Spaltöffnungen vorhanden, die den Einlaß von die Filterkerzen 12 radial durchdringende Spalte sowie die Anlagerungsstelle für Verunreinigungen bilden. Wenn ein Saugschuh 9 oder 10 das Loch einer zugeordneten Filterkerze 12 gerade aodeckt, kommt es zu einer umgekehrten Durchströmung durch die Filterkerze 12. Die bereits gefilterte, sich in dem Gehäuseteil 1 befindende Flüssigkeit tritt nun durch die einzelnen ringförmigen Spalte von außen in das Innere der Filterkerzen 12, und durch diese Rückspülung werden angelagerte Verunreinigungen über den Saugschuh in das Saugrohr 7 ausgetragen. Sobald sich die Saugschuhe 9 und 10 weitergedreht haben, so daß das Loch der zugeordneten Filterkerze 12 wieder dem freien Zustrom der zu filternden Flüssigkeit preisgegeben ist, kehrt sich die Strömung erneut um, und der Filtervorgang beginnt an dieser Filterkerze 12 von neuem.

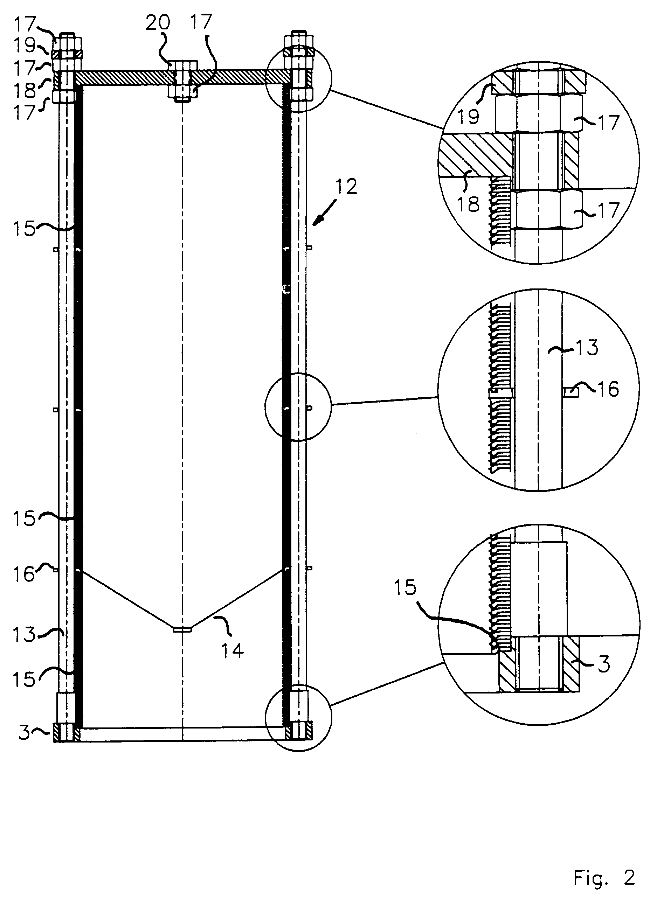

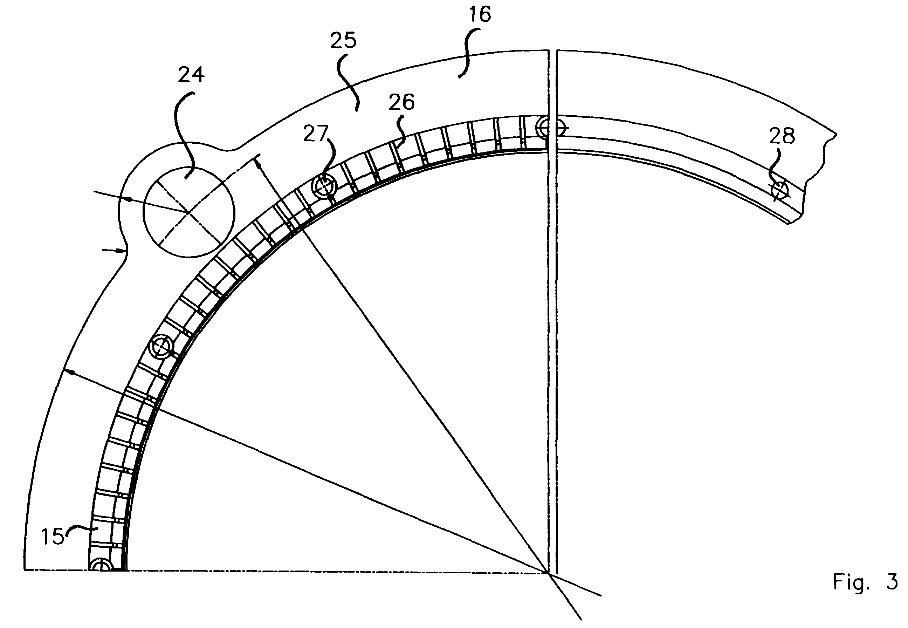

Die Einzelheiten einer Filterkerze 12 sind in der Fig. 2 gezeigt. In den Filterboden 3 sind insgesamt vier Bolzen 13 eingeschraubt, deren freies Ende durch einen Deckel 18 festgelegt ist. Die Bolzen 13 durchdringen Löcher 24 (Fig. 3) in Rändern 25 von Zwischenringen 16, die in regelmäßigen Abständen zwischen weiteren ringförmigen Elementen 15 angeordnet sind, wobei die ringförmigen Elemente 15 den eigentlichen Filterbaustein bilden. Am oberen Ende jedes Bolzens 13 befinden sich drei Muttern 17 und eine benachbarte Filterkerzen zur Versteifung miteinander verbindende Lasche 19, um den aus den ringförmigen Elementen 15 und den Zwischenringen 16 gebildeten Stapel definiert halten zu können. Das bedeutet, daß der aus den ringförmigen Elementen 15 gebildete Stapel unter Einschluß der Ringe 16 nicht gequetscht wird, jedoch auch nicht Platz zum Ausweichen hat. Vielmehr sind alle ringförmigen Elemente 15 und Zwischenringe 16 ortsfest gehalten, ohne verformt zu werden. In der Mitte des Deckels 18 befindet sich noch ein Bolzen 20 mit einer Mutter 17, die im vorliegenden Fall nicht benutzt werden. An dieser Stelle können die einzelnen Filterkerzen 12 eines Gehäuseteils untereinander befestigt werden, so daß eine ausreichende Stabilität vorhanden ist.

In Höhe des untersten Zwischenringes 16 ist in die Filterkerze 12 noch ein Grobrechen 14 eingebaut, der dafür sorgt, daß grobe Verunreinigungen nicht tief in die Filterkerze 12 eindringen können. Vielmehr werden sie durch den Grobrechen 14 im untersten Bereich der Filterkerze 12 gehalten. In dieser Weise wird sichergestellt, daß die Verunreinigung ausgetragen wird, wenn sich der zugehörige Saugschuh 9 oder 10 über dem Loch der Filterkerze 12 befindet. Wegen der an dieser Stelle heftigen Strömung und wegen des kurzen Weges ist ein Austrag der Verunreinigung so gut wie sicher. Der Grobrechen 14 ist ein einfaches Kunststoffteil mit einem Teller und radial abstehenden Spangen, die an dem entsprechenden Zwischenring 16 befestigt sind.

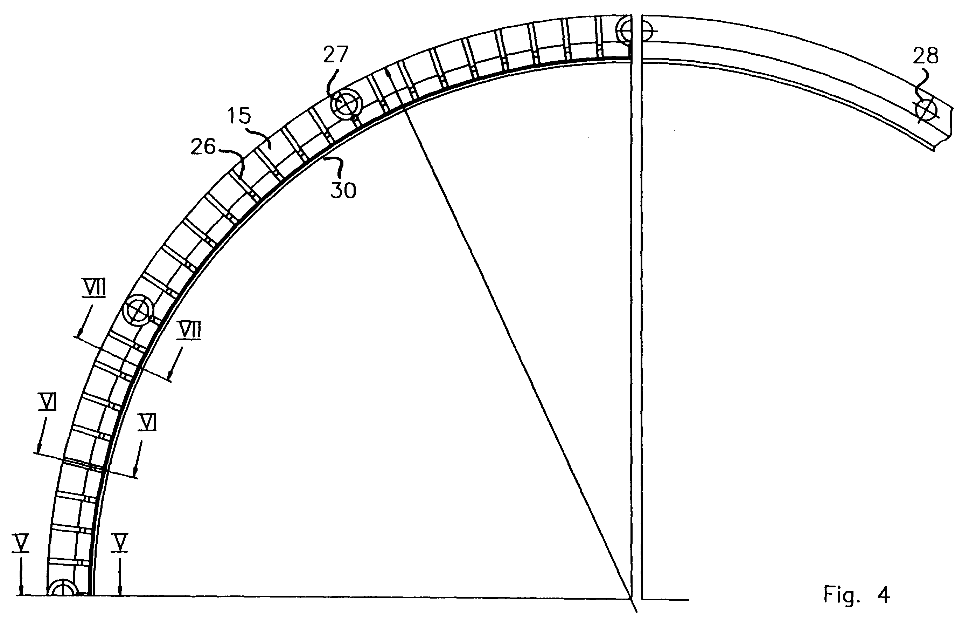

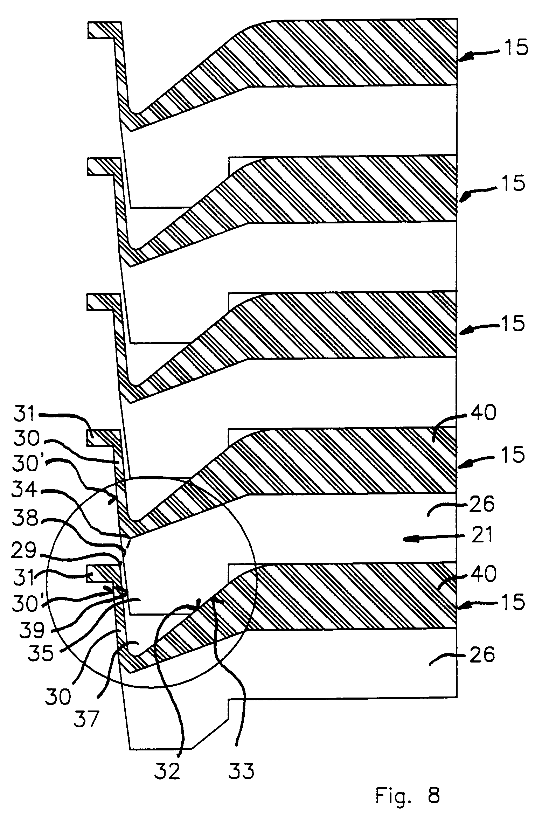

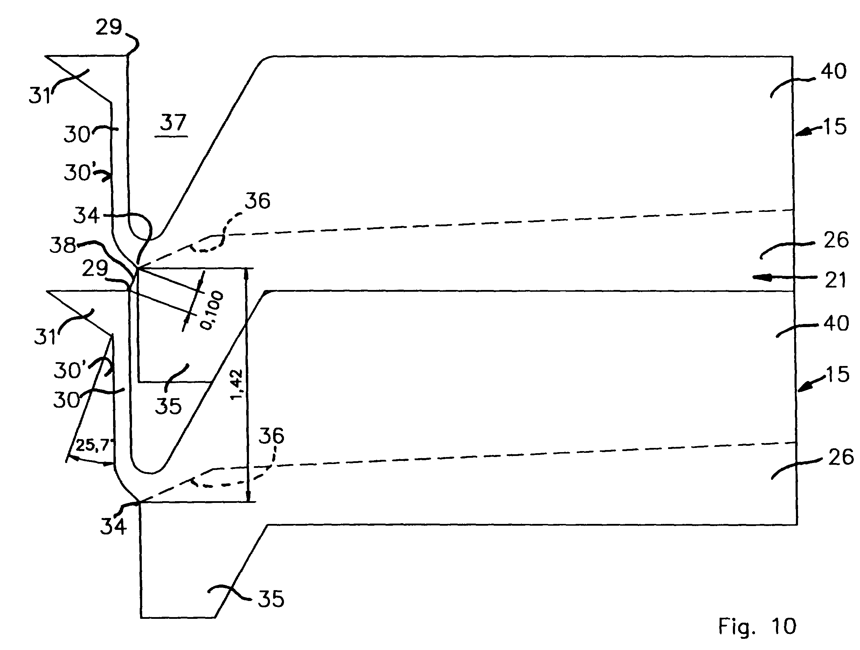

Nachfolgend wird die Wirkungsweise der ringförmigen Elemente 15 näher erläutert, wobei sich die Fig. 4 bis 9 auf ein Ausführungsbeispiel beziehen, während die Fig. 10 eine etwas geänderte Form wiedergibt. Die Fig. 8 und 9 sowie Fig. 10 lassen im übrigen sehr deutlich den mit 21 bezeichneten ringförmigen Spalt erkennen, der sich zwischen zwei benachbarten ringförmigen Elementen 15 ausbildet.

In der Fig. 4 ist in der linken Bildhälfte ein Viertel eines ringförmigen Elementes 15 gezeigt, und zwar dessen Unterseite, bezogen auf die Anordnung der Filterkerze 12 gemäß, der Fig. 2. Die Unterseite trägt in regelmäßigen Abständen radiale Stege 26, die auf der glatten Oberseite eines ringförmigen Elementes 15 aufliegen, das darunter liegt. Die glatte Oberseite ist in der rechten Bildhälfte von Fig. 3 und 4 als Ausschnitt wiedergegeben. Die Stege 26 sorgen dafür, daß zwei benachbarte ringförmige Elemente 15 zur Bildung des ringförmigen Spaltes 21 einen vorgegebenen, gleichbleibenden Abstand aufweisen und druckstabil aufeinander gelegt werden können. Zur Fixierung der einzelnen ringförmigen Elemente 15 aneinander ist jede Unterseite mit mehreren, gleichmäßig um den Umfang verteilten Stiften 27 versehen, die in entsprechende Stecklöcher 28 auf der glatten Oberseite der ringförmigen Elemente 15 eintauchen und leicht klemmend darin sitzen.

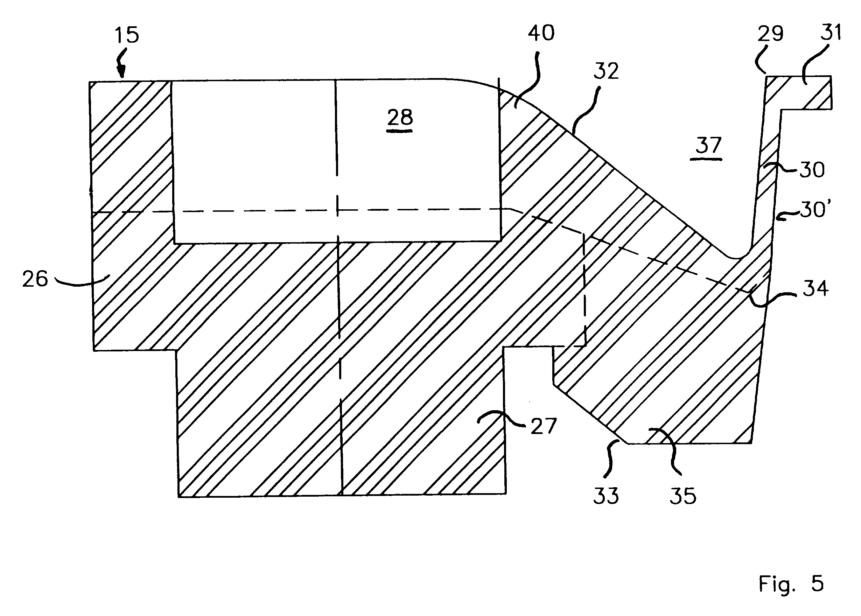

Die Fig. 5 zeigt die Schnittansicht einer Stelle eines ringförmigen Elementes 15, an der sich ein Steckstift 27 und ein Steckloch 28 befinden. Es ist deutlich zu erkennen, daß der Steckstift 27 im Bereich eines Steges 26 liegt. Das Steckloch 28 reicht durch einen ringförmigen Körper 40 hindurch, der den Hauptbestandteil des ringförmigen Elementes 15 bildet. Durch eine entsprechende Materialanhäufung um den Steckstift 27 herum ist sichergestellt, daß jedes Steckloch 28 ein Sackloch ist, also jeder Steckstift 27 in das benachbarte Steckloch 28 greifen kann. Um möglichst wenig Filterkapazität zu verschenken, kann der in der Fig. 3 wiedergegebene Zwischenring 16 ebenfalls mit Stegen 26 und mit Steckstiften 27 bzw. Stecklochern 28 versehen sein. Jeder Zwischenring 16 ist aus Stabilitätsgründen insgesamt dicker als jedes ringförmige Element 15, was aus der Fig. 2 zu erkennen ist.

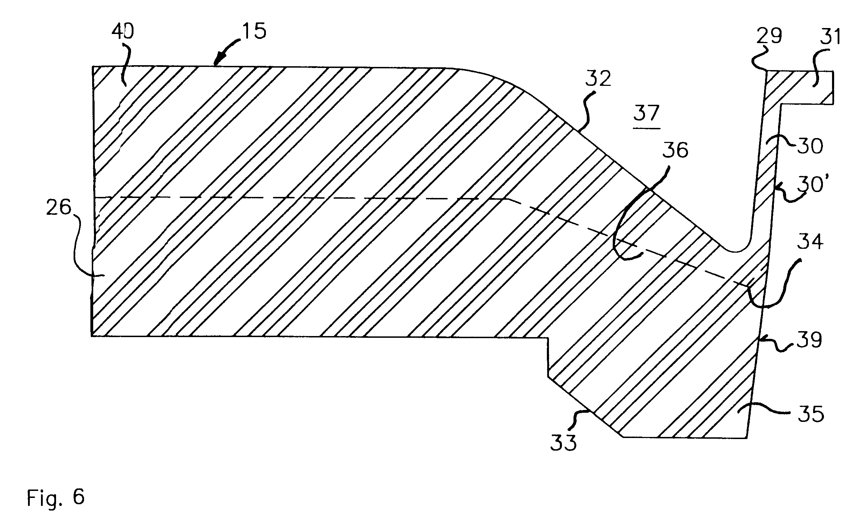

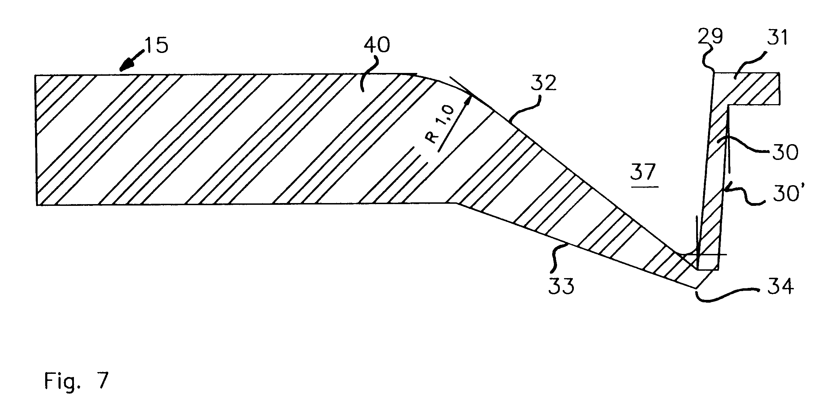

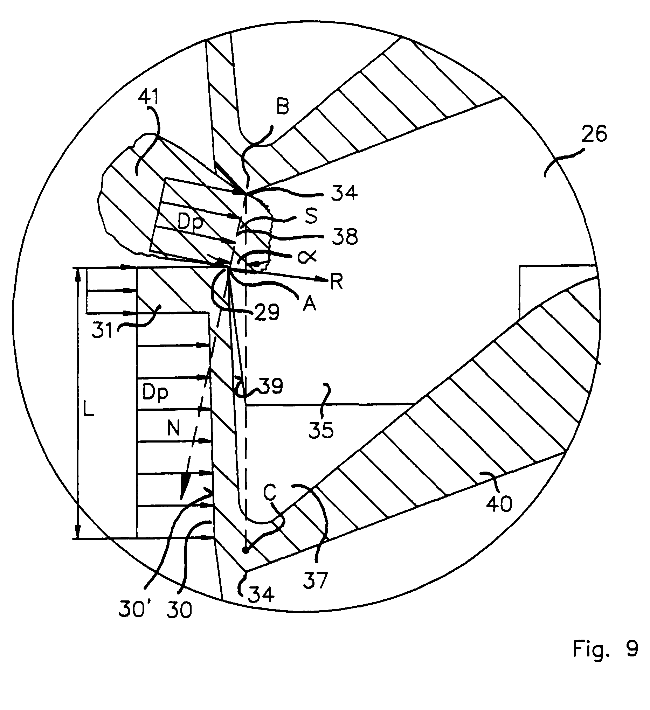

In den Fig. 6 und 7 ist eine Schnittansicht des ringförmigen Elementes 15 im Bereich des Steges 26 bzw. außerhalb des Steges 26 (Fig. 7) wiedergegeben. Die Trennlinie zwischen Körper 40 und Steg 26 ist in der Fig. 6 wie auch in der Fig. 5 gestrichelt angedeutet. An der Innenseite jedes ringförmigen Elementes 15 befindet sich eine Lippe 30, die an ihrem freien Ende einen Wulst 31 aufweist. Zwischen der Lippe 30 und dem Körper 40 befindet sich ein Hohlraum 37, in den bei zusammengesteckten ringförmigen Elementen 15 eine Stütze 35 als Abschnitt des Steges 26 hineinragt. Eine Schrägfläche 32 am Rande des Hohlraumes 37 entspricht einer Schrägfläche 33 an der Stütze 35; beide Schrägflächen liegen bei zuswengesteckten ringförmigen Elementen 15 (vgl. Fig. 8) aneinander. Das in den Fig. 5 bis 7 wiedergegebene Ausführungsbeispiel führt bei ineinandergesteckten ringförmigen Elementen 15 zu einer Spaltöffnung 38 von ca. 0,3 mm Höhe. Die Begrenzung des ringförmigen Spaltes 38 wird einmal von einer Öffnungskante 29 der Lippe 30 gebildet, und zum anderen von einer festen Öffnungskante 34, die sich am Übergang von der Lippe 30 zu dem Körper 40 durch eine winkelige Gestaltung der Oberfläche ergibt. Diese Einzelheit ist besonders gut aus den Fig. 8 und 9 zu erkennen.

Das Ineinandergreifen übereinandergesetzter ringförmiger Elemente 15 zur Bildung einer Filterschicht ist besonders gut aus Fig. 8 in Verbindung mit Fig. 9 zu erkennen. Anhand der Darstellung von Fig. 9 wird im folgenden die Wirkungsweise des Filters im Bereich der Spaltöffnung 38 sowie der Lippe 30 und der angrenzenden Teile erläutert:

In Fig. 8 befindet sich die dargestellte Schicht aus übereinandergesetzten ringförmigen Elementen 15 im Ruhezustand oder im Umschaltpunkt zwischen Filterbetrieb und Rückspülbetrieb, auf jeden Fall unterliegen die in der Zeichnung links liegenden breiten Vorderflächen 30' der Lippen 30 keiner Beanspruchung durch Strömungskräfte. Die rückseitige Fläche der Lippe 30 befindet sich deshalb im Abstand von der der Lippe 30 zugewandten Seite 39 der Stütze 35. Die Spaltöffnung 38 ist durch eine gepunktete Linie zwischen den mit Bezugszeichen versehenen Elementen 15 angedeutet und erstreckt sich von der Öffnungskante 29 der Lippe 30 zu der festen Öffnungskante 34 am Übergang von der Lippe 30 zu dem Körper 40. Fig. 9 zeigt den eingekreisten Bereich von Fig. 8 im Filterbetrieb. Die Lippe 30 ist unter dem Einfluß der auf ihre Vorderflache wirkenden Strömungskräfte (linienartige Belastung Dp) etwa um den gedachten Drehpunkt C elastisch radial nach außen ausgelenkt worden, und zwar bis zum Anschlag an der Seite 39 der Stütze 35, wie dargestellt. Infolge der Drehbewegung um den gedachten Drehpunkt C ist die Öffnungskante 29 der Lippe 30 entsprechend nach rechts - mit Bezug auf die Zeichnung - gewandert, so daß die Entfernung zur festen Öffnungskante 34 und entsprechend die Weite s des Öffnungsspaltes 38 abgenommen hat.

Wenn ein Partikel 41 von der dargestellten Form und Größe in die Spaltöffnung 38 geschwemmt wird und die Strömungskräfte (Druckdifferenz Dp) das Partikel 41 tiefer in die Spaltöffnung 38 einzutreiben suchen, verhindern die längs der Vorderfläche 30' auf die Lippe 30 wirkenden Strömungskräfte eine Vergrößerung bzw. Aufweitung der Spaltöffnung 38, so daß das Partikel 41 nicht tiefer in die Spaltöffnung 38 eindringen und sich tief in der Spaltöffnung 38 verklemmen kann. Sobald die Strömung beim Übergang auf Rückspülbetrieb unterbrochen wird, läßt der Druck auf die Vorderfläche 30' der Lippe 30 nach, und die Lippe 30 kehrt, indem sie eine Drehbewegung entgegen dem Uhrzeigersinn um den Drehpunkt C ausführt, wieder in ihre Ruhelage, in der keine elastischen Verformungskräfte auf sie einwirken, zurück. Durch die selbsttätige Rückstellung der Lippe 30 in die Ruhelage wird die Spaltöffnung 38 auf ihre ursprüngliche Weite vergrößert, so daß die den Partikel 41 festhaltenden Klemmkräfte aufgehoben werden und das Partikel 41 freigeben. Mit dem dann einsetzenden Rückspülstrom wird das Partikel ebenso wie die übrigen Ablagerungen leicht entfernt und ausgetragen.

Die dargestellte Geometrie sowie die daraus resultierenden, auf die Lippe 30 und das Partikel 41 einwirkenden Kräfte werden nachstehend erläutert:

Die Spaltöffnung 38 wird begrenzt durch die als Punkte A und B dargestellten Öffnungskanten 29, 34. Die Lippe 30 von der Länge L wird als um den gedachten Drehpunkt C drehbar angenommen. Die drei Punkte A, B und C bilden mit den Längen L und s ein Dreieck mit dem Winkel $\alpha$. Die Lippe 30 hat sich bereits bei geringer Druckdifferenz am Punkt A an die Stütze 35 angelegt. Die Lippe 30 und das Partikel 41 werden inzwischen durch eine höhere Druckdifferenz belastet, die als linienartige Belastung Dp dargestellt ist. Das Partikel 41 erzeugt an den Öffnungskanten 29, 34 Reibkräfte und Normalkräfte. Im ungünstigsten Fall mit sehr kleinem Keilwinkel (wie dargestellt) steht die Reibkraft R senkrecht auf s, und die Normalkraft N liegt in Richtung s.

Die Kraft L x Dp wirkt auf die Lippe 30 und somit in Richtung einer Verengung der Spaltöffnung 38. Die Kraft R ist gleich ( Dp x s/2 ) und N ist gleich (R/RW), wobei RW der Reibwert ist. Die Kraft N wirkt in der Richtung "Spaltöffnung vergrößern", und die Kraft R wirkt in Richtung "Spaltöffnung verengen".

Damit sich die Spaltöffnung 38 beim Rückspülen und dem damit verbundenen Rückstellen der Lippe 30 deutlich öffnet, um anhaftende Verschmutzungen bzw. klemmende Partikel 41 sicher freizugeben, sich jedoch keinesfalls verengt, was unweigerlich zum Verklemmen der Partikel 41 führen würde, soll einerseits der Winkel $\alpha$ deutlich über Null liegen, und andererseits nimmt der auf eine Vergrößerung der Spaltöffnung 38 hinwirkende Einfluß der Kraft N bei größeren Winkeln $\alpha$ zu. Die Länge L und der Winkel $\alpha$ müssen deshalb so auf die Weite s der Spaltöffnung 38 und aufeinander abgestimmt sein, daß für den möglichen Bereich des Reibwertes RW die resultierende Summe der auftretenden Kräfte in Richtung "Spalt verengen" wirkt. In einem praktischen Beispiel ist L/s = 3 , und der Winkel $\alpha$ = 13° Diese Verhältnisse erlauben auch ungünstige Reibpaarungen und können deshalb als sehr sicher gelten.

In Anspruch 3 ist eine Bemessungsregel für den Winkel $\alpha$ angegeben.

Bei dem Ausführungsbeispiel gemäß Fig. 10 ist, wie dort angedeutet, eine wesentlich engere Spaltöffnung 38 von nur 0,1 mm vorhanden, auch ist der Wulst 31 und der Hohlraum 37 geringfügig anders gestaltet als bei dem vorhergehend beschriebenen Ausführungsbeispiel. Die Funktion und der Wirkungsmechanismus sind jedoch grundsätzlich gleich. Es ist deutlich zu erkennen, daß die Verbindungslinie von der Öffnungskante 29 der Lippe 30 zu der festen Öffnungskante 34 beim Übergang der Lippe 30 in den Körper 40 unter einem Winkel von 25,7° zur Mittelachse der Filterkerze 12 verläuft, wobei die Öffnungskante 29 der Lippe 30 - radial gesehen - weiter innen liegt.

Wenn - ähnlich wie in dem Ausführungsbeispiel von Fig. 9 - ein Partikel wie ein Sandkorn mit keilförmiger Gestalt in die Spaltöffnung 38 geschwemmt wird, versucht das (hier nicht dargestellte) Partikel infolge des Flussigkeitsdruckes tiefer in die Spaltöffnung 38 einzudringen und dabei die Spaltöffnung 38 entsprechend aufzuweiten. Die Lippe 30 bzw. ihr Wulst 31 würde in diesem Fall - mit Bezug auf die Zeichnung - nach links unten durch das Sandkorn verdrängt. Tatsächlich findet jedoch eine ganz andere Bewegung der Lippe 30 statt, wenn die Strömungskräfte und damit auch der Flüssigkeitsdruck auf das Sandkorn zunehmen, nämlich eine Auslenkung der Lippe 30 im Uhrzeigersinn um einen im Übergangsbereich zwischen dem Fuß der Lippe 30 und dem Körper 40 gelegenen Drehpunkt, so daß sich der Öffnungsspalt 38 verengt und infolgedessen das Sandkorn nicht tiefer in den Öffnungsspalt 38 eindringen kann. Die Auslenkung der Lippe 30 findet statt, weil der auf die Vorderfläche 30' der Lippe 30 wirkende Strömungsdruck die Lippe 30 entsprechend elastisch verformt, bis sie an der Stütze 35 anliegt. Diese Lage kann jedoch bereits beim Einsetzen eines relativ geringen Flüssigkeitsdrucks herbeigeführt sein, wenn die elastische Verformbarkeit der Lippe 30 entsprechend ausgelegt ist, und diese Ausführungsform wird bevorzugt. Eine steifere Lippenkonstruktion bedarf einer höheren Druckdifferenz zur elastischen Verformung der Lippe 30 als eine im Verformungsbereich, beispielsweise im Übergangsbereich zwischen der Lippe 30 und dem Körper 40 entsprechend schwächer und weniger steif dimensionierte Konstruktion. Entscheidend ist jedoch auch hier, daß jede - mit Bezug auf den Kerzenfilter 12 - radial nach außen gerichtete elastische Verformung oder elastische Auslenkung der Lippe 30 entsprechende elastische Rückstellkräfte aufbaut, die sofort wirksam werden, wenn die Strömung unterbrochen wird, insbesondere beim Übergang vom Filterbetrieb zum Rückspülbetrieb. Denn die elastischen Rückstellkräfte bewirken eine Rückstellung der Lippe 30 in die Ruhelage Im Abstand von der Stütze 35, wie in Fig. 10 dargestellt, mit der Folge einer entsprechenden Aufweitung der Spaltöffnung 38, so daß dort lagernde bzw. festgehaltene Teilchen auf jeden Fall gelöst werden und durch den einsetzenden Rückspülstrom leicht ausgeschwemmt werden können.

Die Kontur 36 der an den Hohlraum 37 angrenzenden Seite jedes Körpers 40 dient dazu, unerwünschte Ablagerungen im Spalt 21 zu vermeiden.

In Fig. 10 ist deutlich zu erkennen, daß sich der Spalt 21 für die Strömung zwischen den Öffnungskanten 29 und 34 nach außen hin zwischen den Stegen 26 hindurch erweitert, und zwar nicht nur wegen der radialen Anordnung der Stege 26, sondern auch wegen der Abstandsvergrößerung der Flachseiten der Körper 40 zueinander. Diese Ausbildung stellt keine Bedingung für das erfolgreiche Filtern und Rückspülen dar. Allerdings tritt durch den so gebildeten Diffusor auf der Außenseite der Filterkerze 12 insgesamt eine Druckerhöhung ein, die die Strömungsverluste herabsetzt. Außerdem wird einam Verklemmen von Partikeln 41 entgegengewirkt. Aus Fig. 10 ist weiterhin deutlich zu erkennen, daß pro Element 15 eine Bauhöhe von 1,42 mm benötigt wird, um jeweils einen einzigen ringförmigen Spalt 21 für die Filtrierung zu bilden. Dieser Wert ist, gemessen an bekannten Kerzenfiltern, ausgezeichnet. Als Folge der niedrigen Bauhöhe jedes Elementes 15 kann insgesamt eine kürzere Filterkerze 12 hergestellt werden bei gleicher Filterleistung, was der Rückströmgeschwindigkeit durch die ringförmigen Spalte 21 in der Nähe des Deckels 18 zugute kommt. Die Elemente 15 bestehen aus einem Kunststoffmaterial, das sich gut spritzen läßt, formstabil ist und insbesondere formbeständig gegenüber dem zu filternden Medium ist.

Aus der vorangehenden Beschreibung ist erkennbar geworden, daß der Selbstreinigungseffekt beim Rückspülen bzw. beim Stillstand der Durchströmung durch die Elastizität der Lippe 30 bewirkt wird. Diese Effekte stellen sich insbesondere dann in der vorausberechneten Form ein, wenn die gegenüberliegende Kante 34 besonders steif ist. Diese Bedingung ist bei der Erfindung erfüllt. Im Bereich der Kante 34 geht der Stegabschnitt 35 in den Ringkörper 40 über, so daß eine hervorragende Stabilisierung dieses Materialbereichs jedes Elementes 15 vorhanden ist. Die Kante 34 kann Im übrigen völlig frei gestaltet werden, weil an dieser Stelle lediglich der Übergang von der Lippe 30 zu dem Ringkörper 40 ausgeformt werden muß. Ein winkeliger oder gerundeter Übergang steht also vollkommen im Belieben des Konstrukteurs.

## Patentansprüche

1. Rückspülbares Filter,

   - bei dem die Rückspülung durch Umkehrung der Durchströmungsrichtung bewirkt wird,
   - mit einer Schicht aus übereinandergesetzten Elementen (15) aus einem elastisch verformbaren Material,
   - von denen jeweils zwei benachbarte Elemente (15) einen durchströmten Spalt bilden,
   - dessen auf der einen Seite der übereinandergesetzten Elemente (15) liegende Zustromseite die Anlagerungsstelle für Verunreinigungen durch Partikel, wie Sandkörner, ist, und
   - dessen Abstromseite auf der anderen Seite der Elemente (15) gebildet ist,
   - die mit Hilfe von an den Elementen (15) angeordneten Abstandselementen (26), wie Noppen oder Stegen, im Abstand zueinander gehalten sind,
   - dadurch **gekennzeichnet,** daß
   - jedes Element (15) an seiner Zustromseite eine mit ihrer breiten Vorderfläche (30') der Strömung Zugewandte, in Strömungsrichtung elastisch auslenkbare oder elastisch verformbare Lippe (30) trägt,
   - deren Öffnungskante (29) mit der gegenüberliegenden festen Öffnungskante (34) des benachbarten Elements (15) die Spaltöffnung (38) bildet,
   - und daß Stützen (35) neben der Lippe (30) angeordnet sind, deren jeweils der Lippe (30) mit Abstand von dieser zugewandte Seite (39) eine geringe Bewegung der Lippe (30) in Strömungsrichtung bis zum Anschlag der Lippe (30) an dieser Seite (39) gestattet,
   - und daß der Abstand der Öffnungskanten (29) jeder Lippe (30) von der gegenüberliegenden festen Öffnungskante (34) des benachbarten Elements (15) - ausgehend von der Stellung ohne Belastung durch Strömungskräfte - auf dem Weg der elastischen Auslenkung oder elastischen Verformung der Lippe (30) in Strömungsrichtung bis zum Anschlag der Seite (39) der neben der Lippe (30) angeordneten Stütze (35) abnimmt, so daß ein mit der Strömung klemmend in die Spaltöffnung (38) eindringendes Partikel (41) eine die Spaltöffnung (38) verengende Mitnahmekraft auf die Öffnungskante (29) der Lippe (30) ausübt.

2. Filter nach Anspruch 1, dadurch **gekennzeichnet,** daß die Lippe (30) bereits durch einen geringen Differenzdruck der Strömung bis zum Anschlag an die Seiten (39) der Stützen (35) elastisch auslenkbar ist.

3. Filter nach Anspruch 1 oder 2, dadurch **gekennzeichnet**, daß der Winkel $\alpha$ gleich $\not\prec$ Öffnungskante (29) der Lippe (30) - feste Öffnungskante (34) des benachbarten Elements (15) - Lage der Achse C der elastischen Auslenkung der Lippe (30) in der Einheit grad den Wert Null bis max. 7 x L/s hat, höchstens jedoch 90° beträgt, wobei L die Länge der Lippe (30) und s die Weite der Spaltöffnung (38) ist.

4. Filter nach einem oder mehreren der Ansprüche 1 - 3, dadurch **gekennzeichnet**, daß die übereinandergesetzten Elemente (15) ringförmig sind und eine Filterkerze (12) bilden.

5. Filter nach Anspruch 4, dadurch **gekennzeichnet**, daß die ringförmigen Elemente (15) kreisförmig ausgebildet sind und sich die Spalte (21) in radialer Richtung erstrecken.

6. Filter nach Anspruch 5, dadurch **gekennzeichnet**, daß die Durchströmungsrichtung im Filterbetrieb von innen nach außen weist und die Lippen (30) jeweils innen an den ringförmigen Elementen (15) angeordnet sind.

7. Filter nach einem oder mehreren der vorstehenden Ansprüche, dadurch **gekennzeichnet**, daß zwischen der Lippe (30) und dem sich in Strömungsrichtung stoffschlüssig anschließender Körper (40) ein Hohlraum (37) angeordnet ist.

8. Filter nach einem oder mehreren der vorstehenden Ansprüche, dadurch **gekennzeichnet**, daß die Stützen (35) an jedem Element (15) an der von der Lippe (30) in Strömungsrichtung abgewandten Seite angebracht sind und für den verformungsbegrenzenden Eingriff mit der Lippe (30) des benachbarten Elements (15) vorgesehen sind.

9. Filter nach einem oder mehreren der Ansprüche 1 - 7, dadurch **gekennzeichnet**, daß die Stützen in Strömungsrichtung sowie im Abstand hinter der Lippe (30) an dem gleichen Element (15) wie diese Lippe (30) in Stegform ausgebildet sind und für die Verformungsbegrenzung dieser Lippe (30) vorgesehen sind.

10. Filter nach Anspruch 9, dadurch **gekennzeichnet**, daß die stegförmig im Abstand hinter der Lippe (30) am gleichen Element (15) wie diese Lippe (30) ausgebildeten Stützen in einer Ebene mit den die Elemente (15) voneinander trennenden Stegen (26) liegen.

11. Filter nach einem oder mehreren der Ansprüche 1 - 10, dadurch **gekennzeichnet**, daß die Lippe (30) an ihrem freien Ende eine Verstärkung, insbesondere einen umlaufenden Wulst (31), trägt.

12. Filter nach einem oder mehreren der Ansprüche 1 - 11, dadurch **gekennzeichnet**, daß die Lippe (30) zwischen dem freien Ende und dem festen Ende im wesentlichen als dünne Wandung, im Falle kreisförmiger Elemente (15) aus einem zylindrischen Ring gebildet ist.

13. Filter nach Anspruch 7, dadurch **gekennzeichnet**, daß das feste Ende der Lippe (30) gekrümmt in den Körper (40) übergeht.

14. Filter nach Anspruch 13, dadurch **gekennzeichnet**, daß der gekrümmte Übergang des festen Endes der Lippe (30) in den Körper (40) winkelig unter Formung der die Spaltöffnung (38) bildenden festen Öffnungskante (34) des Elements (15) erfolgt.

15. Filter nach Anspruch 14, dadurch **gekennzeichnet**, daß die als Anschlag für die Lippe (30) dienende Seite (39) jeder Stütze (35) an der Stelle in den Körper (40) übergeht, an der sich die feste Öffnungskante (34) des betreffenden Elements (15) befindet.

16. Filter nach Anspruch 7, dadurch **gekennzeichnet**, daß der Hohlraum (37) auf der dem Körper (40) zugewandten Seite des Elements (15) mit einer Schrägfläche (32) versehen ist, die mit gleicher Neigung der Schrägfläche (33) der Stütze (35) entspricht, die in den Hohlraum (37) hineinragt.

17. Filter nach Anspruch 7, dadurch **gekennzeichnet**, daß sich der Abstand zwischen den Flachseiten des Körpers (40) zur Erweiterung der Kanalabschnitte zur Abströmseite hin vergrößert.

18. Filter nach Anspruch 7, dadurch **gekennzeichnet**, daß der dem Hohlraum (37) gegenüberliegende Körperabschnitt des benachbarten Elements (15) eine in Durchströmungsrichtung sich erweiternde Kontur (36) aufweist.

19. Filter nach einem oder mehreren der vorhergehenden Ansprüche 1 - 18, dadurch **gekennzeichnet**, daß jedes Element (15) zur gegenseitigen Fixierung der Elemente (15) gleichmäßig um den Umfang verteilt auf der einen Seite Stecklöcher (28) und auf der anderen Seite Steckstifte (27) aufweist.

20. Filter nach Anspruch 4, dadurch **gekennzeichnet**, daß zur Stabilisierung einer Filterkerze (12) aus ringförmigen Elementen (15) Zwischenringe (16) vorgesehen sind, die die anderen Elemente (15) überragen und mit Löchern (24) zum Durchstecken von Bolzen (13) versehen sind.

**21.** Filter nach Anspruch 4, dadurch **gekennzeichnet**, daß nahe am Eintritt der Filterkerze (12) ein Grobrechen (14) zum Auffangen von großen Verunreinigungen angebracht ist.

**22.** Filter nach einem oder mehreren der Ansprüche 1 - 21, dadurch **gekennzeichnet**, daß auf einem Filterboden (3) Kerzen (12) auf unterschiedlichen Radien angeordnet sind.

**23.** Filter nach einem oder mehreren der Ansprüche 1 - 22, dadurch **gekennzeichnet**, daß die Filterschicht aus gleichgestalteten Elementen (15) gebildet ist.

**24.** Filter nach einem oder mehreren der vorhergehenden Ansprüche, dadurch **gekennzeichnet**, daß die Elemente (15) aus einem elastischen sowie formstabilen und gegenüber dem zu filternden Medium formbeständigen Kunststoffmaterial bestehen.

**Claims**

**1.** Backwashable filter,

- in which backwashing is brought about by reversing the flow direction,
- having a layer of superimposed elements (15) made from an elastically deformable material,
- whereof in each case two adjacent elements form a gap through which a flow takes place,
- whose inflow side located on one side of the superimposed elements (16) is the accumulation point for contaminations by particles such as sand grains, and
- whose outflow side is formed on the other side of the elements (15),
- which are kept spaced apart from one another with the aid of spacing members (26), such as studs or lugs, located on the elements, characterized in that
- each element (15) carries on its inflow side a lip (30) elastically deflectable in the flow direction and facing the flow with its wide front face (30'),
- whose opening edge (29) forms the gap opening (38) with the facing, fixed opening edge (34) of the adjacent element (15),
- and that supports (35) are positioned alongside the lip (30) and whose facing side (39) spaced from the lip (30) allows a small movement of the lip (30) in the flow direction until the lip (30) strikes against said side (39),
- and the spacing of the opening edge (29) of each lip (30) from the facing, fixed opening edge (34) of the adjacent element (15) - starting from the position without laoding by flow forces, on the path of the elastic deflection or elastic deformation of the lip (30) decreases in the flow direction until striking the side (39) of the support (35) arranged alongside the lip (30), so that a particle (41) jamming int the gap opening (38) with the flow exerts a driving force on the opening edge (29) of the lip (30) which narrows the gap opening (38).

**2.** Filter according to claim 1, characterized in that, even by a small differential pressure of the flow, the lip (30) is elastically deflectable until it strikes against the sides (39) of the supports (35).

**3.** Filter according to claim 1 or 2, characterized in that the angle $\alpha$ equal $\not{\lambda}$ opening edge (29) of the lip (30) - fixed opening edge (34) of the adjacent element (15) - position of the axis C of the elastic deflection of the lip (30) has the value zero to max. 7 x L/s measured in degree and is max. 90°, whereby L is the length of the lips (30) and s is the width of the gap opening (38).

**4.** Filter according to one or more of the claims 1 to 3, characterized in that the superimposed elements (15) are annular and form a filter candle (12).

**5.** Filter according to claim 4, characterized in that the annular elements (15) are circular and the gaps (21) extend radially.

**6.** Filter according to claim 5, characterized in that the flow direction in filter operation is from the inside to the outside and the lips (30) are in each case located on the inside on the annular elements (15).

**7.** Filter according to one ore more of the preceding claims, characterized in that there is a cavity (37) between the lip (30) and the connecting body (40) in the flow direction.

**8.** Filter according to one or more of the preceding claims, characterized in that the supports (35) on each element (15) are fitted to the side remote from the lip (30) and provided for the deformation-limiting engagement with the lip (30) of the adjacent element (15).

**9.** Filter according to one or more of the claims 1 to 7, characterized in that the supports are constructed in the flow direction and spaced behind the lip (30) on the same element (15) as the latter in web form and are provided for the deformation limitation of said lip (30).

**10.** Filter according to claim 9, characterized in that the weblike supports constructed in spaced manner behind the lip (30) on the same element (15) as the latter are in one plane with the webs (26) separating the elements (15) from one another.

11. Filter according to one or more of the claims 1 to 10, characterized in that the lip (30) has on its free end a reinforcement, particularly an all-round bead (31).

12. Filter according to one or more of the claims 1 to 11, characterized in that the lip (30) between the free end and the fixed end is essentially constructed as a thin wall and in the case of circular elements (15) from a cylindrical ring.

13. Filter according to one or more of the claims 1 to 12, characterized in that the fixed end of the lip (30) passes in curved manner into the body (40).

14. Filter according to one or more of the claims 1 to 13, characterized in that the fixed opening edge (34) of the element (15) forming the gap opening (38) is formed by an angular transition from the body (40) to the fixed end of the lip (30).

15. Filter according to claim 14, characterized in that the side (39) of each support (35) serving as a stop for the lip (30) passes into the body (40) at the point at which is located the fixed opening edge (34) of the particular element (15).

16. Filter according to one or more of the claims 1 to 15, characterized in that the cavity (37) is provided on the side of the element (15) facing the body (40) with an inclined face (32), corresponding with the same inclination to the inclined face (33) of the support (35) which projects into the cavity (37).

17. Filter according to one or more of the claims 1 to 16, characterized in that the spacing between the flat sides of the body (40) increases towards the outflow side for widening the channel portions.

18. Filter according to one or more of the claims 1 to 17, characterized in that the body portion of the adjacent element (15) opposite to the cavity (37) has a contour (36) widening in the through-flow direction.

19. Filter according to one or more of the preceding claims 1 to 18, characterized in that for reciprocal fixing of the elements (15), each element (15) has uniformly circumferentially distributed pinning holes (28) on one side and guide pins (27) on the other.

20. Filter according to one or more of the claims 1 to 19, characterized in that for the stabilization of a filter candle (12) from elements (15) are provided intermediate elements and in the case of circular elements (15) corresponding intermediate rings (16), which project over the other elements (15) and are provided with holes (24) for the insertion of bolts (13).

21. Filter according to one or more of the claims 1 to 20, characterized in that close to the entrance of the filter candle (12) is fitted a coarse rake (14) for collecting large contaminants.

22. Filter according to one or more of the claims 1 to 21, characterized in that candles (12) are arranged on different radii on a filter plate (3).

23. Filter according to one or more of the claims 1 to 22, characterized in that the filter layer is formed from identically designed elements (15).

24. Filter according to one or more of the preceding claims, characterized in that the elements (15) are made form an elastic and dimensionally stable plastics material, which is deformation-resistant with respect to the medium to be filtered.

**Revendications**

1. Filtre à lavage à contre-courant

   - dans lequel le lavage à contre-courant est effectué par inversion de la direction de traversée,
   - avec une couche d'éléments (15) superposés en un matériau élastiquement déformable,
   - parmi lesquels deux éléments (15) adjacents forment respectivement une fente traversée,
   - dont le côté d'affluence se trouvant d'un côté des éléments (15) superposés est l'emplacement de dépôt pour des impuretés par des particules, telles que des grains de sable, et
   - dont le côté d'écoulement est formé sur l'autre côté des éléments (15),
   - qui sont maintenus à écartement les uns des autres à l'aide d'éléments d' entretoisement (26), tels que des boutons ou des barrettes, disposés sur les éléments (15),
   caractérisé en ce que
   - chaque élément (15) porte, sur son côté d'affluence, une lèvre (30) élastiquement pliable ou élastiquement déformable en direction d'écoulement par sa surface avant large (30') tournée vers l'écoulement,
   - dont l'arête d'ouverture (29) forme, avec l'arête d'ouverture (34) fixe opposée de l'élément (15) adjacent, l'ouverture de fente (38)
   - et que des supports (35) sont disposés à côté de la lèvre (30), dont la face (39) tournée vers la lèvre (30) à distance de celle-ci permet un faible déplacement de la lèvre (30) dans la direction d'écoulement jusqu'à butée de la lèvre (30) sur cette face (39)
   - et que l'écartement des arêtes d'ouverture (29) de chaque lèvre (30) à chaque arête d'ouverture (34) fixe opposée de l'élément (15) adjacent - en partant de la position sans contrainte par des forces d'écoulement - diminue sur le chemin du pliage élastique ou de la déformation élastique de la lèvre (30) dans la direction d'écoulement jusqu'à la butée de la face (39) du support (35) disposé à côté de la lèvre (30), de telle sorte qu'une particule (41) pénétrant à serrage dans l'ouverture de fente (38) avec l'écoulement exerce sur l'arête d'ouverture (29) de la lèvre (30) une force d'entraînement rétrécissant l'ouverture de fente (38).

2. Filtre selon la revendication 1,
caractérisé en ce que la lèvre (30) peut plier élastiquement déjà par une faible pression différentielle de l'écoulement jusqu'à la butée sur les côtés (39) des supports (35).

3. Filtre selon la revendication 1 ou 2,
caractérisé en ce que l'angle $\alpha$ égal à arête d'ouverture (29) de la lèvre (30) - arête d'ouverture fixe (34) de l'élément adjacent (15) - position de l'axe C du pliage élastique de la lèvre (30) dans l'unité, en gradient, a la valeur zéro jusqu'à 7 x L/s au maximum, au plus cependant 90°, L étant la longueur de la lèvre (30) et s la largeur de l'ouverture de fente (38).

4. Filtre selon l'une des revendications 1 à 3,
caractérisé en ce que les éléments (15) superposés sont de forme annulaire et forment un filtre en forme de bougie (12).

5. Filtre selon la revendication 4,
caractérisé en ce que les éléments (15) de forme annulaire sont réalisés de forme circulaire et les fentes (21) s'étendent en direction radiale.

6. Filtre selon la revendication 5,
caractérisé en ce que la direction de traversée en fonctionnement en filtre est dirigée de l'intérieur vers l'extérieur et les lèvres (30) sont disposées respectivement à l'intérieur sur les éléments (15) de forme annulaire.

7. Filtre selon une ou plusieurs des revendications précédentes,
caractérisé en ce qu'un volume vide (37) est disposé entre la lèvre (30) et le corps (40) adjacent d'une seule pièce en direction d'écoulement.

8. Filtre selon une ou plusieurs des revendications précédentes,
caractérisé en ce que les supports (35) sur chaque élément (15) sont rapportés sur la face écartée de la lèvre (30) dans la direction d'écoulement et sont prévus pour la prise limitant la déformation avec la lèvre (30) de l'élément (15) adjacent.

9. Filtre selon une ou plusieurs des revendications 1 à 7,
caractérisé en ce que les supports sont réalisés en forme de barrettes en direction d'écoulement ainsi qu'à l'écartement derrière la lèvre (30) sur le même élément (15) que cette lèvre (30) et sont prévus pour la limitation de déformation de cette lèvre (30).

10. Filtre selon la revendication 9,
caractérisé en ce que les supports réalisés en forme de barrettes à écartement derrière la lèvre (30) sur le même élément (15) que cette lèvre (30) se trouvent dans un plan avec les barrettes (26) séparant les éléments (15) les uns des autres.

11. Filtre selon une ou plusieurs des revendications 1 à 10,
caractérisé en ce que la lèvre (30) porte à son extrémité libre un renfort, en particulier un bourrelet (31) continu.

12. Filtre selon une ou plusieurs des revendications 1 à 11,
caractérisé en ce que la lèvre (30) est réalisée, entre l'extrémité libre et l'extrémité fixe, essentiellement sous forme d'une paroi mince, dans le cas d'éléments (15) de forme circulaire sous forme d'une bague cylindrique.

13. Filtre selon la revendication 7,
caractérisé en ce que l'extrémité fixe de la lèvre (30) se transforme en courbe en le corps (40).

14. Filtre selon la revendication 13,
caractérisé en ce que la transition courbe de l'extrémité fixe de la lèvre (30) en le corps (40) se produit selon un angle en formant l'arête d'ouverture (34) fixe de l'élément (15) formant l'ouverture de fente (38).

15. Filtre selon la revendication 14,
caractérisé en ce que la face (39) de chaque support (35) servant de butée pour la lèvre (30) se transforme en le corps (40) à l'emplacement où se trouve l'arête d'ouverture (34) fixe de l'élément (15) en question.

16. Filtre selon la revendication 7,
caractérisé en ce que le volume vide (37) est muni sur le côté de l'élément (15) tourné vers le corps (40), d'une surface inclinée (32) qui correspond, avec la même inclinaison, à la surface inclinée (33) du support (35) qui fait saillie dans le volume vide (37).

17. Filtre selon la revendication 7,

caractérisé en ce que l'écartement entre les faces planes du corps (40) augmente en direction d'écoulement pour agrandir la section de canal.

18. Filtre selon la revendication 7, caractérisé en ce que la section de corps de l'élément (15) adjacent opposé au volume vide (37) présente un contour (36) s'élargissant en direction de traversée.

19. Filtre selon une ou plusieurs des revendications précédentes 1 à 18, caractérisé en ce que chaque élément (15) présente, pour une fixation mutuelle des éléments (15), d'un côté des trous d'enfichage (28) et de l'autre côté des broches d'enfichage (27) régulièrement répartis autour de la périphérie.

20. Filtre selon la revendication 4, caractérisé en ce que des bagues intermédiaires (16) sont prévues pour stabiliser un filtre en forme de bougie (12) en éléments (15) annulaires, font saillie par rapport aux autres éléments (15) et sont munies de trous (24) pour l'enfoncement de boulons (13).

21. Filtre selon la revendication 4, caractérisé en ce qu'un crible à grosses mailles (14) est disposé près de l'entrée du filtre en forme de bougie (12) pour capter les grosses impuretés.

22. Filtre selon une ou plusieurs des revendications 1 à 21, caractérisé en ce que des bougies (12) de différents diamètres sont disposées sur un fond de filtre (3).

23. Filtre selon une ou plusieurs des revendications 1 à 22, caractérisé en ce que la couche de filtre est formée d'éléments (15) de même configuration.

24. Filtre selon une ou plusieurs des revendications précédentes, caractérisé en ce que les éléments (15) sont constitués d'un matériau synthétique élastique ainsi que de forme stable et solide en forme par rapport au milieu à filtrer.

Fig. 1

Fig. 2

Fig. 3

Fig. 4

EP 0 648 145 B1

Fig. 5

EP 0 648 145 B1

Fig. 6

EP 0 648 145 B1

Fig. 7

Fig. 8

Fig. 9

Fig. 10

EP 0 648 145 B1